# EUROPÄISCHE PATENTANMELDUNG

(11) **EP 4 144 221 A1**
(43) Veröffentlichungstag der Anmeldung: **08.03.2023**
(21) Anmeldenummer: 21194482.2
(22) Anmeldetag: 02.09.2021
(51) Int. Cl.: A21D 13/48, A21D 13/80, A23P 30/10

(54) **ESSBARES BEHÄLTNIS**

(71) Anmelder: ELIAS Natural Packaging AG, 9495 Triesen (LI)
(72) Erfinder: Behringer, Günther Ludwig, 6850 Dornbirn (AT)
(74) Vertreter: Kaminski Harmann

(57) **Zusammenfassung**

Die vorliegende Erfindung betrifft einen essbarer Becher (1) oder ein ähnliches Behältnis bestehend aus einem Teigerzeugnis auf Basis von Getreidemahlerzeugnissen, aufweisend eine Außenfläche (2), eine Oberkante (3) und eine innere Mantelfläche (8) die ein Innenvolumen (4) zur Aufnahme von Flüssigkeiten (30) definiert und unbeschichtet ist, sodass im Innenvolumen befindliche Flüssigkeiten direkt das Teigerzeugnis kontaktieren, wobei das Teigerzeugnis eine Teigausbeute von unter 150 aufweist und die Getreidemahlerzeugnisse mindestens Mehl und Kleie aufweisen, und ein Mischungsverhältnis zwischen Kleie und Mehl im Teigerzeugnis höchstens 1:3 beträgt. Die Erfindung betrifft außerdem ein Verfahren zur Herstellung eines solchen Behältnisses.

## Beschreibung

Die vorliegende Erfindung betrifft essbare Behältnisse auf Getreidebasis, insbesondere Becher und ähnliche Trinkgefäße zur Aufnahme von heißen und kalten Flüssigkeiten für den Konsum durch einen Benutzer. Außerdem betrifft die Erfindung ein Herstellungsverfahren für ein solches Behältnis. Ein erfindungsgemäß hergestelltes und ausgestaltetes Behältnis ist vorteilhaft sehr feuchtigkeitsresistent, wobei diese Feuchtigkeitsresistenz ohne Beschichtungen der Innenseite entsteht, und das Behältnis ausschließlich aus natürlichen Zutaten hergestellt sein kann.

Der seit Jahren anhaltende Trend zum Kaffee zum Mitnehmen (sog. "Coffee to go") verursacht ein großes Müllproblem, da die dabei verwendeten Einwegbecher zumeist große Mengen umweltschädliches Plastik aufweisen und somit nicht abbaubar sind. Insbesondere für Anwendungen, bei denen Mehrweggeschirr nicht sinnvoll anwendbar ist, können essbare Trinkgefäße wie Kaffeebecher daher eine umweltfreundliche Alternative darstellen.

Essbare Becher und anderes Geschirr sind als solches seit langem bekannt. Beispielsweise zeigen die US 1,509,194 und die DE 38 14 593 A1 jeweils Trinkgefäße, die mittels Backen eines getreidemehlhaltigen Teiges hergestellt werden. Probleme, die auf Backwaren basierendes Geschirr regelmäßig aufweisen, sind einerseits die Bruchgefahr und andererseits der mangelnde Schutz vor Durchfeuchtung, wobei letzteres naturgemäß insbesondere bei Trinkgefäßen problematisch ist. Wenn das Gefäß aufgrund der Durchfeuchtung seine Stabilität verliert, ist dies aufgrund der dadurch schwierigeren Handhabung nicht nur unangenehm für den Benutzer, es kann auch der flüssige Inhalt aus dem Gefäß austreten und ist damit nicht nur für den Benutzer des Gefäßes verloren, sondern kann auch zur Verunreinigung der Umgebung führen. Es ist daher nötig, einen effektiven Schutz der Backware vor Durchfeuchtung zu gewährleisten. Für einen solchen Schutz vor Durchfeuchtung können auch definierte zeitliche Anforderungen bestehen, die eine solche Backware erfüllen muss. Beispielsweise kann eine solche Anforderung beinhalten, dass eine Durchfeuchtung eines Trinkgefäßes durch Heißgetränke (z.B. bei 85°C) - und damit ein Auslaufen derselben - für mindestens 45 Minuten ausgeschlossen sein muss.

Aus dem Stand der Technik sind verschiedene Ansätze bekannt, der Durchfeuchtung einer als Trinkgefäß ausgestalteten Backware durch in dieser beinhaltete Flüssigkeiten mittels Aufbringung wasserfester Schichten entgegenzuwirken. So beschreibt die WO 2016/140627 A1 einen Becher aus Mürbeteig mit einer wasserfesten Glasur basierend auf Eiweiß und Zucker, die WO 2017/220936 A1 beschreibt einen essbaren Becher, der durch eine ovalbuminhaltige Schicht wasserfest gemacht wird und zusätzlich auf der Innenseite mit Schokolade beschichtet werden kann, und die AU 2018/101450 A4 offenbart essbares Geschirr mit einer Glasur basierend auf Reis- oder Tapiokamehl. Nachteilig können solche auf der Innenseite eines Trinkgefäßes aufgebrachte Glasuren von dem Getränk aufgenommen werden und so dessen Geschmack unerwünscht beeinträchtigen.

Es ist daher eine Aufgabe der Erfindung, ein verbessertes Trinkgefäß, insbesondere Becher, als Alternative zu üblichen Einwegbechern bereitzustellen.

Insbesondere ist es eine Aufgabe, ein solches Trinkgefäß bereitzustellen, das komplett sowohl essbar als auch kompostierbar ist.

Es ist eine weitere Aufgabe, ein solches Trinkgefäß bereitzustellen, das einen langanhaltenden Schutz vor Durchfeuchtung aufweist, insbesondere einen mindestens 45 Minuten andauernden Schutz.

Eine weitere Aufgabe ist es, ein solches Trinkgefäß bereitzustellen, das unbeschichtet ist, insbesondere ohne Glasuren oder andere Beschichtungen der Innenseite herstellbar ist.

Eine weitere Aufgabe ist es, ein solches Trinkgefäß bereitzustellen, das mit ausschließlich natürlichen Zutaten hergestellt werden kann und frei ist von Lebensmittelzusatzstoffen wie Gelier- oder Verdickungsmitteln.

Eine weitere Aufgabe ist es, ein solches Trinkgefäß bereitzustellen, das eine hohe Stabilität und Bruchfestigkeit aufweist.

Eine weitere Aufgabe ist es, ein solches Trinkgefäß bereitzustellen, das in der Systemgastronomie verwendbar ist, insbesondere stapelbar und mit bekannten Deckelsystemen verwendbar.

Eine weitere Aufgabe ist es, ein System aus einem solchen Trinkgefäß und einem passenden Deckel bereitzustellen.

Mindestens eine dieser Aufgaben wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Ein erster Aspekt der vorliegenden Erfindung betrifft einen essbaren Becher oder ein ähnliches Behältnis, bestehend aus einem Teigerzeugnis auf Basis von Getreidemahlerzeugnissen, aufweisend eine Außenfläche, eine Oberkante und eine innere Mantelfläche, wobei die innere Mantelfläche ein Innenvolumen zur Aufnahme von Flüssigkeiten definiert, das mindestens 100 Milliliter aufweist, und unbeschichtet ist, sodass im Innenvolumen befindliche Flüssigkeiten das Teigerzeugnis direkt kontaktieren. Gemäß diesem Aspekt der Erfindung weist das Teigerzeugnis eine Netto-Teigausbeute von unter 152 auf, und die Getreidemahlerzeugnisse weisen mindestens Mehl und thermisch stabilisierte Kleie auf, wobei ein Mischungsverhältnis zwischen Kleie und Mehl im Teigerzeugnis mindestens 1:5 beträgt, d.h. auf einen Teil Kleie höchstens fünf Teile Mehl kommen.

In einer Ausführungsform des erfindungsgemäßen Bechers steht die Oberkante über die Außenfläche hinaus derart hervor, dass ein Anschlag definiert wird, der eine Befestigung eines Deckels, z.B. eines Deckels auf Basis von Karton, am Becher ermöglicht. Ein Deckel schützt beim Transport des vollen Bechers vor dem Herausspritzen bzw. -schwappen des Inhalts.

In einer weiteren Ausführungsform des erfindungsgemäßen Bechers ist das Teigerzeugnis aus mindestens den folgenden Grundzutaten hergestellt:
- Weizenmehl und/oder Roggenmehl,
- Wasser,
- thermisch stabilisierter Weizenkleie, Roggenkleie und/oder Haferkleie,
- Öl oder Fett, insbesondere Kokosfett,
- Zucker und
- Speisesalz.

Dabei ist das Teigerzeugnis frei von den folgenden Zusätzen:
- Gelatine,
- modifizierte Stärke,
- Alginsäure,
- Alginate,
- Agar-Agar,
- Carragen,
- Furcellaran,
- Johannisbrotkernmehl,
- Guarkernmehl,
- Traganth,
- Gummi arabicum,
- Xanthan,
- Karaya,
- Tarakernmehl,
- Gellan,
- Pektin,
- Cellulose und
- Celluloseether.

In einer weiteren Ausführungsform des erfindungsgemäßen Bechers weist das Teigerzeugnis eine Netto-Teigausbeute von unter 150 auf, insbesondere eine Netto-Teigausbeute zwischen 146 und 150.

In einer weiteren Ausführungsform des erfindungsgemäßen Bechers beträgt ein Mischungsverhältnis zwischen thermisch stabilisierter Kleie und Mehl im Teigerzeugnis mindestens 1:4, d.h. auf einen Teil Kleie kommen höchstens vier Teile Mehl.

In einer weiteren Ausführungsform des erfindungsgemäßen Bechers verläuft auf der inneren Mantelfläche eine Vielzahl an Graten, wobei
- eine Höhe der Grate jeweils mindestens 0,25 Millimeter beträgt,
- eine Breite der Grate jeweils mindestens 1 Millimeter, insbesondere mindestens 1,2 Millimeter beträgt,
- die Vielzahl an Graten aus mindestens 20 Graten, insbesondere mindestens 28 Graten besteht, und/oder
- mindestens eine Teilmenge der Vielzahl an Graten, beispielsweise genau jeder zweite oder jeder dritte Grat, insbesondere mindestens 10 Grate, auf dem Becherboden bis zu einem Mittelpunkt des Becherbodens verlaufen.

In einer weiteren Ausführungsform des erfindungsgemäßen Bechers umfasst das Innenvolumen mindestens 200 Milliliter und ist im wesentlichen kegelstumpfförmig, wobei der Becher zwischen dem Becherboden und der inneren Mantelfläche einen Winkel zwischen 96° und 105°, insbesondere zwischen 99° und 100°, aufweist.

In einer weiteren Ausführungsform des erfindungsgemäßen Bechers ist das Teigerzeugnis mindestens derart feuchtigkeitsresistent, dass Wasser mit einer Temperatur von 85°C und mit einem Volumen von mindestens 100 Millilitern, das sich für mindestens 45 Minuten - vorzugsweise mindestens 60 Minuten - in dem Innenvolumen befindet, nicht aus dem Becher austritt, bzw. ausläuft.

Ein zweiter Aspekt der vorliegenden Erfindung betrifft ein Verfahren zur Herstellung eines essbaren Behältnisses, z.B. eines essbaren Bechers gemäß dem ersten Aspekt. Das Verfahren weist die folgenden Schritte auf:
- Bereitstellen eines Teigstückes durch Vermischen von Grundzutaten in einem definierten Verhältnis und Kneten des Teigstückes,
- Bereitstellen eines formbaren Teiglings aus einer definierten Menge Teig des Teigstückes, sowie
- Formen und Backen des Teiglings, wobei eine Verfestigung des Teigs erfolgt und ein Rohling als ein aus dem verfestigten Teig bestehendes Behältnis bereitgestellt wird.

Das Formen und Backen des Teiglings erfolgen in einer temperierten Fertigungsvorrichtung, die eine Aufnahme und einen Stempel aufweist, wobei eine Innenfläche der Aufnahme im Wesentlichen der Form einer Außenseite des herzustellenden Behältnisses entspricht, eine Stempeloberfläche im Wesentlichen der Form einer Innenseite des herzustellenden Behältnisses entspricht, und der Stempel derart ausgeformt ist, dass bei Vorliegen des Stempels in einer definierten Endposition zwischen der Innenfläche der Aufnahme und der Stempeloberfläche ein definierter Abstand besteht und damit ein Zwischenvolumen definiert ist.

Das Formen und Backen des Teiglings in besagter Fertigungsvorrichtung weist die folgenden Schritte auf:
- Einbringen des Teiglings in die Aufnahme,
- Einführen des Stempels in die Aufnahme bis zu der definierten Endposition, sodass der Teig des Teiglings in das Zwischenvolumen gedrückt wird und die Form eines Rohlings des herzustellenden Behältnisses einnimmt,
- Herausführen des Stempels aus der Aufnahme, und
- Entnahme oder Auswurf des Rohlings.

Dabei werden gemäß diesem Aspekt der Erfindung die Aufnahme und/oder der Stempel auf eine Temperatur zwischen 120°C und 145°C temperiert und der Stempel für einen Zeitraum zwischen 120 und 180 Sekunden in der Endposition belassen, wobei das Einführen des Stempels in die Aufnahme bis zu der definierten Endposition mit einem Druck von über 5 bar erfolgt.

Gemäß einer Ausführungsform des erfindungsgemäßen Verfahrens wird der Teig des Teiglings mit einem Druck von mindestens 6 bar in das Zwischenvolumen gedrückt, insbesondere mit einem Druck von mindestens 7 bar.

In einer Ausführungsform sind die Aufnahme und/oder der Stempel auf eine Temperatur von etwa 140°C (insbesondere zwischen 136°C und 144°) temperiert, und der Stempel verbleibt für einen Zeitraum von etwa 150 Sekunden (insbesondere zwischen 140 und 160 Sekunden) in der Endposition.

Gemäß einer weiteren Ausführungsform des erfindungsgemäßen Verfahrens wird die definierte Menge Teig des Teigstückes derart gewählt, dass das Teigvolumen des Teiglings größer als das Zwischenvolumen ist, sodass der Rohling gegenüber dem herzustellenden Behältnis eine Überformung aufweist, die aus der Volumendifferenz zwischen Teigvolumen und Zwischenvolumen resultiert. Das Verfahren weist dann ein zumindest teilweises Entfernen dieser Überformung auf.

In einer Ausführungsform wird die Überformung derart entfernt, dass eine gleichmäßige Oberkante des Behältnisses entsteht. In einer weiteren Ausführungsform wird die Überformung mittels Fräsen entfernt. Alternativ oder zusätzlich wird die durch die Entfernung der Überformung entstehende Oberkante des Behältnisses besäumt. Ein genaues und vollständiges Entfernen der Überformung sorgt auch dafür, dass ein für einen Deckel geeigneter Rand entsteht.

In einer weiteren Ausführungsform des erfindungsgemäßen Verfahrens beinhaltet das Bereitstellen des Teigstückes ein Herstellen eines Quellstückes, wobei das Quellstück hauptsächlich aus thermisch stabilisierter Kleie (z.B. Weizen-, Roggen- oder Haferkleie oder ein Gemisch dieser Kleiearten) und Wasser besteht, und das Vermischen ein Vermischen des Quellstückes mit Getreidemehl, insbesondere Weizenmehl und/oder Roggenmehl, beinhaltet.

In einer Ausführungsform beträgt ein Mischungsverhältnis zwischen thermisch stabilisierter Kleie und Mehl dabei mindestens 1:5, insbesondere mindestens 1:4, d.h. auf einen Teil Kleie kommen höchstens fünf, bzw. vier, Teile Mehl.

In einer weiteren Ausführungsform ruht das Quellstück vor dem Vermischen mindestens 24 Stunden.

In einer weiteren Ausführungsform beinhaltet das Herstellen des Quellstückes eine Zugabe von Farb- oder Aromastoffen.

In einer weiteren Ausführungsform des erfindungsgemäßen Verfahrens wird der Teig nur sehr kurz, z.B. insgesamt für höchstens drei Minuten geknetet.

In einer weiteren Ausführungsform des erfindungsgemäßen Verfahrens weist der Teig eine Netto-Teigausbeute (TA) von unter 152 auf, insbesondere eine TA zwischen 146 und 150. Die Grundzutaten weisen dabei zumindest auf:
- Getreidemehl, insbesondere Weizenmehl und/oder Roggenmehl,
- Wasser,
- thermisch stabilisierte Kleie, insbesondere Weizenkleie, Roggenkleie und/oder Haferkleie,
- Öl oder Fett, insbesondere Kokosfett,
- Zucker und
- Speisesalz.

Dabei können das Fett verflüssigt, und Zucker und Salz in Wasser gelöst als Grundzutaten verwendet werden.

In einer Ausführungsform des erfindungsgemäßen Verfahrens erfolgt das Bereitstellen des Teigstückes ohne Zugabe von Gelier- oder Verdickungsmitteln. Der Teig ist insbesondere frei von:
- Gelatine,
- modifizierter Stärke,
- Alginsäure,
- Alginaten,
- Agar-Agar,
- Carragen,
- Furcellaran,
- Johannisbrotkernmehl,
- Guarkernmehl,
- Traganth,
- Gummi arabicum,
- Xanthan,
- Karaya,
- Tarakernmehl,
- Gellan,
- Pektin,
- Cellulose und
- Celluloseether.

In einer weiteren Ausführungsform des erfindungsgemäßen Verfahrens weist der Stempel auf seiner Oberfläche Rillen auf, die dazu ausgestaltet sind, Grate in der Innenseite des zu fertigenden Behältnisses zu erzeugen.

In einer weiteren Ausführungsform des erfindungsgemäßen Verfahrens ist der Stempel derart konisch ausgestaltet, dass der Boden und die Innenseite des zu fertigenden Behältnisses einen Winkel zwischen 96° und 105° bilden, insbesondere zwischen 99° und 100°.

Ein dritter Aspekt der vorliegenden Erfindung betrifft ein essbares Behältnis, insbesondere einen essbaren Becher, der durch ein Verfahren gemäß dem zweiten Aspekt der Erfindung erhältlich ist, bzw. durch ein solches Verfahren hergestellt wurde.

Das erfindungsgemäße Behältnis und das erfindungsgemäße Herstellungsverfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1a-b: eine erste beispielhafte Ausführungsform eines Bechers als Beispiel für ein erfindungsgemäßes Behältnis;
- Fig. 2: eine beispielhafte Ausführungsform eines Herstellungsverfahrens für ein erfindungsgemäßes Behältnis;
- Fig. 3a-c: eine zweite beispielhafte Ausführungsform eines Bechers als Beispiel für ein erfindungsgemäßes Behältnis;
- Fig. 4: eine beispielhafte Anordnung einer Backform zur Verwendung in einem Herstellungsverfahrens für einen Becher gemäß der zweiten Ausführungsform;
- Fig. 5a-d: eine Verbindung eines erfindungsgemäßen Bechers mit einem aufsteckbaren Deckel;
- Fig. 6a-c: eine Verbindung eines erfindungsgemäßen Bechers mit einem faltbaren Deckel; und
- Fig. 7: zwei beispielhafte Becher-Deckel-Kombinationen.

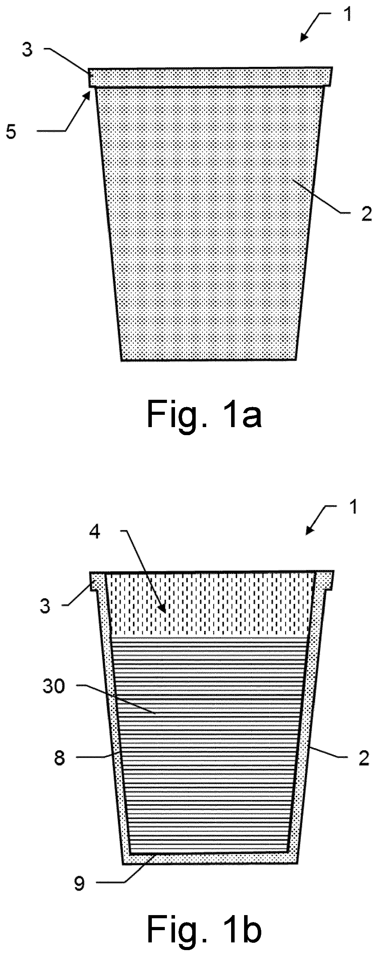

Die Figuren 1a und 1b zeigen eine beispielhafte Ausführungsform eines erfindungsgemäßen Trinkgefäßes in Form eines Bechers 1. Figur 1a zeigt dabei eine Seitenansicht, und Figur 1b einen zentralen Schnitt durch den Becher 1. Dieser besteht aus einem ess- und kompostierbaren Material, hergestellt auf Basis von Getreidemehl. Der Becher 1 weist eine Mantelfläche mit einer Außenseite 2 und einer Innenseite 8, einen Boden 9 und, diesem entgegengesetzt, eine Trinköffnung auf. Die Innenseite 8 definiert zusammen mit dem Becherboden 9 einen oben offenen Hohlraum als Innenvolumen 4 umfasst, das zur Aufnahme von Flüssigkeiten 30, insbesondere Getränken, ausgestaltet ist. An seiner Oberseite weist der Becher 1 eine die Trinköffnung umfassende Oberkante 3 auf, die vorzugsweise abgerundet und/oder gegenüber dem übrigen Becherkörper verdickt ausgeführt ist, und so - ähnlich einer Mundrolle bei Pappbechern - das Trinken angenehmer gestaltet und die Lippen beim Trinken vor Verletzungen schützt. Optional kann die Oberkante 3 nach außen über die Außenseite 2 des Bechers hinausragen und so einen Anschlag 5 zur Verbindung des Bechers mit einem Deckel (hier nicht dargestellt) bilden. Der Becher 1 ist vorzugsweise konisch ausgestaltet, sodass mehrere Becher ineinander gestapelt werden können.

Der Becher 1 ist unbeschichtet, sodass eine im Innenvolumen 4 befindliche Flüssigkeit 30 das Bechermaterial an der Becherinnenseite 8 und Becherboden 9 direkt kontaktiert. Das Bechermaterial ist daher erfindungsgemäß besonders feuchtigkeitsresistent ausgestaltet. Der Becher ist zur Aufnahme heißer wie auch gekühlter Flüssigkeiten geeignet, beispielsweise Kaffee, Tee, Eistee, Suppe oder Limonaden.

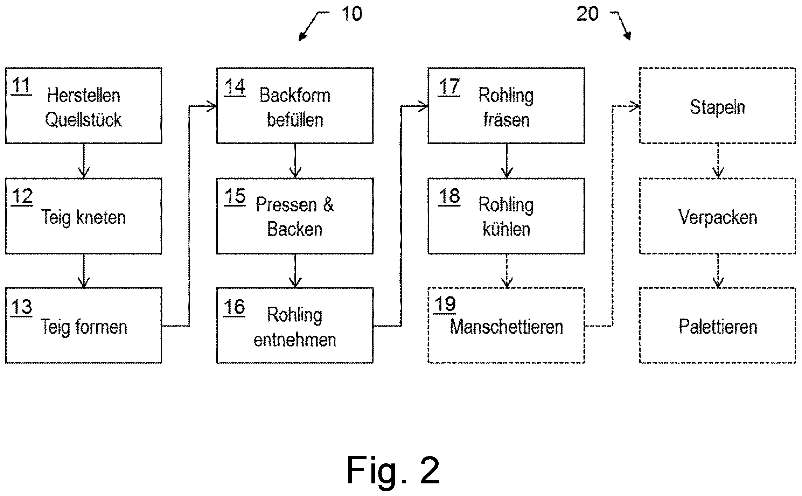

Schritte einer beispielhaften Ausführungsform eines erfindungsgemäßen Verfahrens 10 zur Herstellung eines solchen Bechers 1 werden mit dem Flussdiagramm in Figur 2 illustriert. Zunächst werden die Rohstoffe für den Teig vorbereitet und bereitgestellt. Diese umfassen als Hauptzutat Getreidemahlerzeugnisse wie Weizen- oder Roggenmehl, sowie zusätzlich thermisch stabilisierte Kleie, Wasser, Öl oder Fett, Zucker und Salz. Optional können natürliche Farb- und Aromastoffe zugesetzt werden, beispielsweise Kakao, Rote-Beete-Saft, Bananenpüree oder Gewürze wie Zimt und Vanille.

Als Kleie können insbesondere Weizenkleie, Roggenkleie, Haferkleie oder Mischungen aus diesen Kleiearten verwendet werden (d.h. Weizenkleie und Roggenkleie, Weizenkleie und Haferkleie, Roggenkleie und Haferkleie oder Weizenkleie, Roggenkleie und Haferkleie) . Diese Kleie wird dann thermisch, d.h. durch Hitzeeinwirkung (z.B. bei Temperaturen zwischen 140 und 180°C), stabilisiert, wodurch unter anderem die Haltbarkeit verlängert wird aber auch die Festigkeit eines daraus hergestellten Teiges erhöht wird.

Das Vorbereiten der Rohstoffe umfasst ein Herstellen 11 eines Quellstückes aus Kleie (beispielsweise aus Weizenkleie) und Wasser. Auch die Farb- und Aromastoffe werden vorzugsweise bereits dem Quellstück zugesetzt, um eine besonders gleichmäßige Verteilung dieser Stoffe im Endprodukt zu gewährleisten. Das Quellenlassen des Quellstückes dauert etwa 24 Stunden.

Danach wird das Quellstück im nächsten Schritt mit den restlichen Zutaten zu einem Teig vermengt und geknetet 12. Dabei wird Weizen- und/oder Roggenmehl in etwa der drei- bis fünffachen Menge der Kleie des Quellteiges hinzugefügt. Beispielsweise kann das Mischungsverhältnis zwischen Kleie und Mehl in einem Bereich zwischen 1:4 und 1:5 liegen. Mehr Kleie sorgt dabei für einen festeren Teig, der zwar stabiler aber auch schwerer zu verarbeiten ist.

Die optimalen Mengen der einzelnen Zutaten können auch abhängig von der beabsichtigten Größe des Bechers, also insbesondere abhängig von seiner Füllmenge, variieren. Beispielsweise kann der Teig etwa zur Hälfte aus Weizenmehl oder Roggenmehl oder einem Gemisch aus diesen bestehen. Als besonders vorteilhaft hat sich dabei für kleinere Becher bis etwa 200 ml Inhalt der Einsatz eines Weizenmehls mit höchster Klebereigenschaft (Deutschland: Type 550; Österreich: Type W700) und für größere Becher der Einsatz eines normalen Roggenmehls (Deutschland: Type 997; Österreich: Type W960) erwiesen. Dazu kommen etwa 7-10% Zucker, etwa 4-5% Öl oder Fett und etwa 1% (insbesondere 0,8-1,2%) Salz. Der Wasseranteil im fertigen Teig beträgt dabei zwischen etwa 35% und 40%.

Einige Bestandteile können auch durch ähnliche Zutaten subsituiert werden, beispielsweise kann anstelle von Wasser auch Rote-Beete-Saft verwendet werden, wodurch das Endprodukt rot gefärbt wird, oder der Zucker kann ganz oder teilweise durch andere zuckerhaltigen Zutaten, wie Bananenpüree oder anderes Fruchtmus, ersetzt werden, beispielsweise um dem Becher einen bestimmten Geschmack zu verleihen. Für zucker- oder glutenfreie Varianten ist das Rezept entsprechend anzupassen.

Ein Teil der Getreidemahlerzeugnisse kann durch zerkleinerte, noch verzehrfähige Backwaren ersetzt werden. Dabei kann beispielsweise unverkauftes, noch verzehrfähiges Brot (regional als Alt-, Rück- oder Restbrot bezeichnet) aus Backbetrieben in einem Restbrotzerkleinerer zerkleinert und zur Teigbereitung verwendet werden. Vorteilhaft können auch die beim Backprozess entstehenden Reste auf diese Weise wiederverwendet werden. Dies betrifft zum einen einen während des Herstellungs- und Verpackungsprozess eventuell entstehenden Bruch und zum anderen die beim Backen entstehenden Überformungen des Becherrohlings, die abgefräst bzw. abgeschnitten werden und dann zerkleinert dem Prozess erneut zugeführt werden können.

Das Kneten 12 des Teiges sollte vorzugsweise nicht mehr als zwei bis drei Minuten dauern, um eine hohe Festigkeit des Teiges zu gewährleisten. Um in Anbetracht dieser kurzen Knetdauer eine möglichst hohe Bruchfestigkeit des Endproduktes gewährleisten zu können, sollten alle Zutaten im Teig möglichst homogen und mit geringer Granularität vorliegen, vorzugsweise als molekular fein aufgelöste Partikel. Zucker, Salz und Fett werden daher vorzugsweise in flüssigem Zustand hinzugefügt. Der Zucker kann vor dem Zufügen in Wasser, Öl oder verflüssigten Fett aufgelöst oder geläutert werden, das Salz kann in Form von Sole hinzugefügt werden. Es sollte außerdem vorzugsweise ein Öl oder Fett mit geringer Neigung zum Ranzigwerden verwendet werden, wie beispielsweise Kokosfett, um ein frühzeitiges Verderben der Backware zu vermeiden.

Durch die gewählten Zutaten und das kurze Kneten 12 entsteht ein besonders schwerer und fester Teig (ähnlich einem Mürbeteig), der eine Netto-Teigausbeute (TA) von unter 152 aufweist, vorzugsweise eine TA zwischen 146 und 150. Dieser Teig wird portioniert und geformt 13. Beispielsweise kann der Teig dazu geteilt und rundgewirkt werden, sodass kugelförmige Teigportionen entstehen. Alternativ kann der Teig in Stangenform gepresst und dann in gleichmäßige Strangabschnitte geschnitten werden.

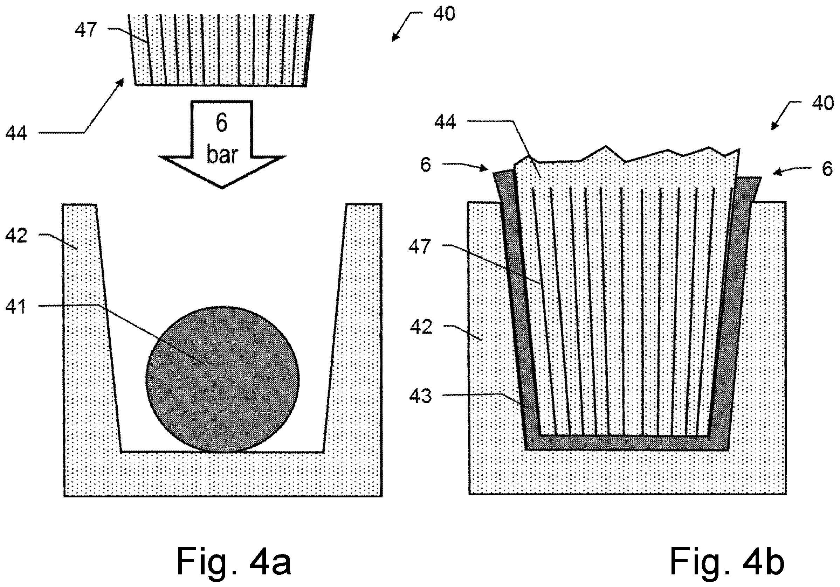

Diese Teigportionen werden in eine zweiteilige Backform (siehe Figuren 4a-b) gefüllt, bzw. eingelegt 14. Die Backform presst mittels eines Stempels die Teigportion in Becherform und backt 15 diese. Um eine sichere Ausformung der Becherform zu erreichen, ist für das Pressen des wie beschrieben besonders schweren und festen Teiges vorzugsweise ein Druck von etwa 6 bar anzusetzen. Das Backen 15 erfolgt bei Temperaturen von etwa 140°C und dauert je nach Größe des Bechers zwei bis drei Minuten. Anschließend wird der entstandene Becher-Rohling der Form entnommen 16 bzw. automatisch ausgeworfen.

Versuche der Anmelderin haben ergeben, dass der feste Teig in Verbindung mit dem angegebenen Druck und der angegebenen Backzeit und -temperatur vorteilhaft in einem äußerst guten Schutz des Bechers vor Durchfeuchtung resultiert. Beispielsweise kann aufgrund der erfindungsgemäßen Prozessparameter beim Pressen und Backen 15 eine Durchfeuchtung des fertigen Bechers durch Heißgetränke (85°C) - und damit ein Auslaufen derselben - für mindestens 45 Minuten ausgeschlossen werden. Bei kalten Getränken ist der Durchfeuchtungs- und Auslaufschutz entsprechend noch länger gewährleistet.

Als Folge des Pressens und Backens 15 der Teigportion kann durch Ausdehnung des Teiges eine Überformung zwischen den zwei Teilen der Backform entstehen. Diese kann, z.B. durch Fräsen oder Schneiden, anschließend wieder entfernt werden 17, um ein einheitliches Erscheinungsbild für alle produzierten Becher zu erreichen und die Handhabung zu erleichtern. Zusätzlich kann der obere Rand des Bechers besäumt werden, um beim Trinken ein möglichst angenehmes Gefühl an den diesen Rand berührenden Lippen zu erzeugen. Alternativ kann eine solche Überformung auch ganz oder teilweise am Becher belassen werden, wodurch ein individueller und gefühlt natürlicherer Eindruck entsteht. Vorzugsweise sollte das Fräsen 17 direkt nach dem Backen 15 bzw. nach der Entnahme 16 aus der Backform erfolgen, solange der Becher noch nicht völlig ausgehärtet ist.

Je fester ein Teig ist, desto ungleichmäßiger kann er sich unter Druck verhalten. Um zu verhindern, dass ein sich ungleichmäßig in der Backform verteilender Teig die Oberkante des zu fertigenden Bechers an einigen Stellen nicht oder mit zu geringer Stärke erreicht, kann eine Teigmenge der Teigportion absichtlich etwas zu groß gewählt werden, nämlich so, dass eine Überformung vollflächig an der Oberkante des Bechers auftritt. Je größer dieser Überschuss - also diejenige Menge an Teig, die später die Überformung bildet - gewählt wird, desto höher der Rohstoffverbrauch pro Becher aber desto geringer die Gefahr der Ausschussproduktion. Eine Optimierung des Überschusses sollte daher zumindest teilweise in Abhängigkeit von der Teigfestigkeit und der Spezifikationen der Backform erfolgen.

Nach dem Backen 15 und dem optionalen Fräsen 17 muss der Becher abschließend etwa fünf Minuten abkühlen 18 und kann dann direkt verwendet werden oder zum Verpacken 20 vorbereitet werden. Insbesondere kann der Becher mit einer Papier-Manschette ("Sleeve") versehen werden 19, die insbesondere der Erhaltung eines hygienisch einwandfreien Zustands des Bechers dient, sodass er nach Gebrauch bedenkenlos verzehrt werden kann. Die Manschette umschließt dabei die Außenseite des Bechers mindestens insoweit, dass diese bei üblicher Handhabung des Bechers (z.B. Auspacken, Entnahme aus einem Becherstapel, Befüllen, Ausgeben, Trinken) nicht direkt angefasst werden muss. Außerdem kann eine solche Manschette den Boden des Bechers vorzugsweise um einige Millimeter von einem Untergrund abheben, wenn der Becher auf diesem abgestellt wird. Dadurch wird der Boden weniger leicht verschmutzt. Optional kann der Boden auch komplett von der Manschette verhüllt werden.

Zusätzlich können in den Becher Markierungen, wie Logos oder Schriftzüge, eingebrannt werden, beispielsweise durch einen Laser. Dabei kann es sich beispielsweise um ein Logo des ausgebenden Unternehmens auf der Becheraußenseite handeln. Ebenso können die Markierungen eine Volumenmarkierung umfassen ("Eichstrich"), bzw. auch mehrere zur Markierung verschiedener Füllmengen (z.B. zwei Striche für einen einfachen und einen doppelten Espresso). Die eingebrannten Markierungen können auch Informationen über den Becher selbst bereitstellen, z.B. eine Geschmacksrichtung des Bechers angeben, die Zutaten auflisten und/oder ein Produktions- oder Verfallsdatum angeben. Alternativ oder zusätzlich können diese Angaben auch auf der Manschette bereitgestellt werden.

Der Vorgang des Verpackens 20 umfasst weiterhin ein Stapeln von mindestens sechs, vorzugsweise mindestens zwölf, Bechern ineinander, wobei die Becher vorzugsweise derart konisch ausgestaltet sind, dass ein solches Ineinanderstapeln - wie auch ein späteres Entnehmen aus dem Stapel - bruchfrei ermöglicht wird. Ein Winkel zwischen dem Becherboden und der inneren Mantelfläche von mindestens 96° hat sich dabei als vorteilhaft erwiesen - ein Winkel von mindestens 99° als besonders vorteilhaft. Die gestapelten Becher können anschließend in Kartons verpackt, palettiert und versandt werden. Optional kann eine Vielzahl an Stapeln innerhalb eines Kartons verpackt sein, wobei jeder Stapel in einem separaten Beutel, insbesondere luftdicht, verpackt ist.

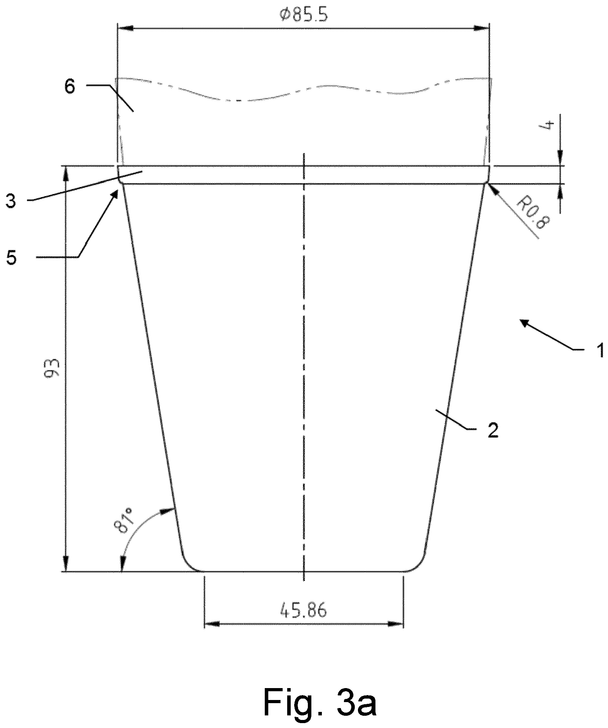

Die Figuren 3a-c zeigen eine zweite beispielhafte Ausführungsform eines erfindungsgemäßen Bechers 1. Wie der in den Figuren 1a-b dargestellte Becher, weist dieser einen Körper mit einer Außenseite 2, einer Innenseite 8 und einem Boden 9 auf.

Gestrichelt dargestellt ist eine Überformung 6, die beim Pressen und Backen des Rohlings entsteht. Bei einer Becherhöhe dieser Ausführungsform von 93 mm kann die unregelmäßige Überformung 6 beispielsweise eine Höhe von bis zu 20 mm aufweisen. In dieser Ausführungsform wird die Überformung 6 mittels Fräsen entfernt, wodurch eine Oberkante 3 entsteht, die einen Anschlag 5 auf der Becheraußenseite bereitstellt. Dieser Anschlag sollte vorzugsweise mindestens 0,5 mm über die Becheraußenseite herausragen, um einen sicheren Halt eines Deckels zu ermöglichen. In der Figur 3a beträgt die Breite des Anschlags 0,8 mm.

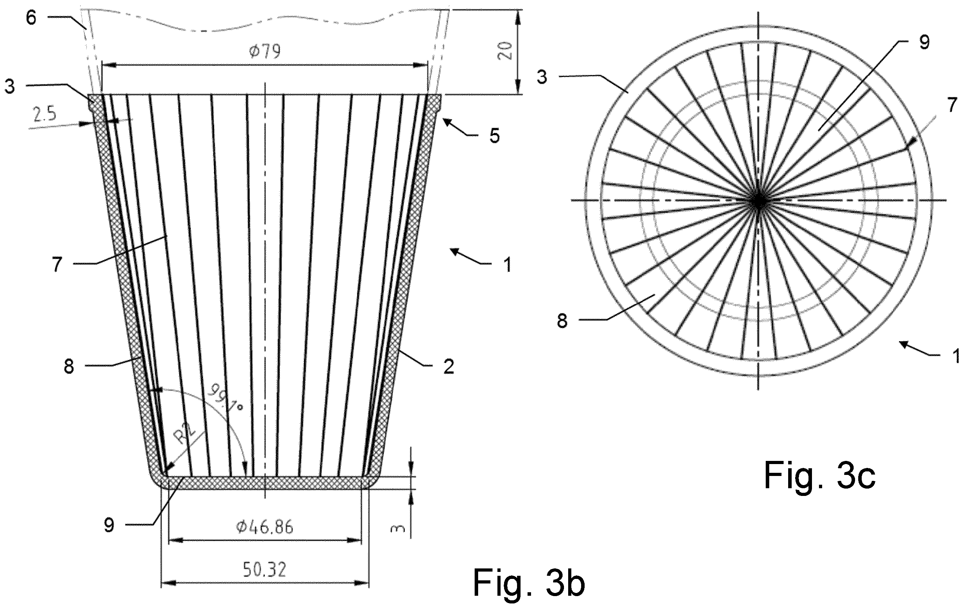

In der Schnittdarstellung der Figur 3b und der Aufsicht der Figur 3c sind erhabene Grate 7 dargestellt, die sich in dieser Ausführungsform auf der Innenseite 8 des Körpers 2 sowie auf der Bodenoberseite 9 befinden und durch Rillen im Stempel der Backform erzeugt werden (siehe Figuren 4a-b). Diese Grate 7 erhöhen vorteilhaft die Stabilität des Bechers 1 und verbessern den Schutz vor Bruch und Durchfeuchtung. Die Anzahl der Grate kann in Abhängigkeit des Becherumfanges gewählt werden. Vorzugsweise sollten mindestens 20 Grate vorhanden sein. In der hier gezeigten Ausführungsform sind es 28 Grate, wobei jeder dieser Grate 7 eine Tiefe von etwa 0,2 mm bis etwa 0,5 mm und eine Breite von etwa 1 mm bis etwa 1,5 mm aufweist. Vorzugsweise wird nur jeder zweite Grat 7 wird bis zum Mittelpunkt des Becherbodens 9 durchgezogen. Die anderen Grate enden vorher, d. h. entweder auf dem Becherboden 9 oder bereits an der Mantelinnenseite 8.

Dargestellt sind in den Figuren 3a-c jeweils rein beispielhafte Dimensionen (in Millimetern) für einen Becher mit einem Füllvolumen von 0,2 Litern. Ein solcher Becher wiegt je nach verwendeten Zutaten im Endzustand zwischen etwa 40 und 45 Gramm.

Der Becher 1 ist vorzugsweise konisch ausgestaltet, ist in seiner Grundform also in Wesentlichen ein Kegelstumpf. Der Boden 9 und die Innenseite 8 des Bechers 1 bilden dementsprechend einen stumpfen Winkel, der abhängig von den Dimensionen des Bechers so gewählt ist, dass mehrere Becher problemlos ineinander gestapelt werden können. In der hier gezeigten rein beispielhaften Ausführungsform beträgt dieser Winkel 99,1°. Es ist zu beachten, dass sich der Winkel wie auch die übrigen Dimensionsangaben in diesen Figuren auf eine beispielhafte Backform zur Herstellung des Bechers beziehen. Im fertigen Produkt können die Winkel- und Dimensionsangaben geringfügig abweichen.

Der Winkel ist vorzugsweise so zu wählen, dass die Zahl der bruchfrei stapelbaren Becher möglichst hoch ist (z.B. mindestens zehn Becher), wobei die Höhe des Stapels möglichst niedrig ist. Gleichzeitig sollte aber der Schwerpunkt des einzelnen Bechers im leeren wie gefüllten Zustand noch so niedrig liegen, dass ein abgestellter Becher nicht zu leicht umkippt. Außerdem sollte der Becher beim Halten und Trinken angenehm in der Hand liegen. Winkel zwischen 96° und 105° und insbesondere zwischen 99° und 100° haben sich für diese Zwecke als vorteilhaft erwiesen.

In den Figuren 4a und 4b wird schematisch ein beispielhafter Aufbau einer als eine zweiteilige Backform ausgestalteten Fertigungsvorrichtung 40 zur Herstellung eines erfindungsgemäßen Bechers dargestellt. Die Backform 40 besteht aus einer Aufnahme 42, die die äußere Form des gewünschten Bechers vorgibt und einem Stempel 44, der die Form der Innenseite des Bechers erzeugt.

In die Aufnahme wird eine Teigportion 41 eingelegt, woraufhin der Stempel mit einem vorgegebenen Druck bis zu einer vorgegebenen Position im Innern der Aufnahme 42 geführt wird.

Diese vorgegebene Position nimmt der Stempel in Figur 4b ein. Dabei wird ein Zwischenvolumen in Form eines herzustellenden Bechers definiert. Die in der Aufnahme befindliche Teigportion 41 wird in dieses Zwischenvolumen gepresst, sodass ein Becherrohling 43 entsteht, der in diesem Zustand gebacken wird.

Der Stempel 44 wird für einen bestimmten Zeitraum in dieser Position belassen und anschließend wieder aus der Aufnahme 42 herausgeführt, sodass der Rohling 43 entnommen oder ausgeworfen werden kann.

Aufgrund der Schwere und Festigkeit des Teiges, ist eine gleichmäßige Verformung der Teigportion 41 nicht garantiert. Es ist jedoch wünschenswert, dass jeder Becherrohling 43 durch das Pressen überall eine Mindesthöhe erreicht. Um dies zu gewährleisten, kann die Teigportion 41 geringfügig zu groß ausgeführt werden, wodurch ringsum eine unregelmäßige Überformung 6, die nach dem Backen durch Fräsen und Besäumen der entstehenden Kante entfernt werden kann.

Der Druck ist insbesondere von der Größe der Teigportion 41 abhängig und beträgt in der hier gezeigten Ausführungsform 6 bar. Der Stempel 44 kann vorzugsweise Rillen 47 aufweisen, die auf der Innenseite des Bechers entsprechende Grate erzeugen, die die Stabilität des Bechers verbessern. Zur Erzeugung der in den Figuren 3b und 3b gezeigten Grate 7 weist der Stempel entsprechend 28 dieser Rillen 47 auf.

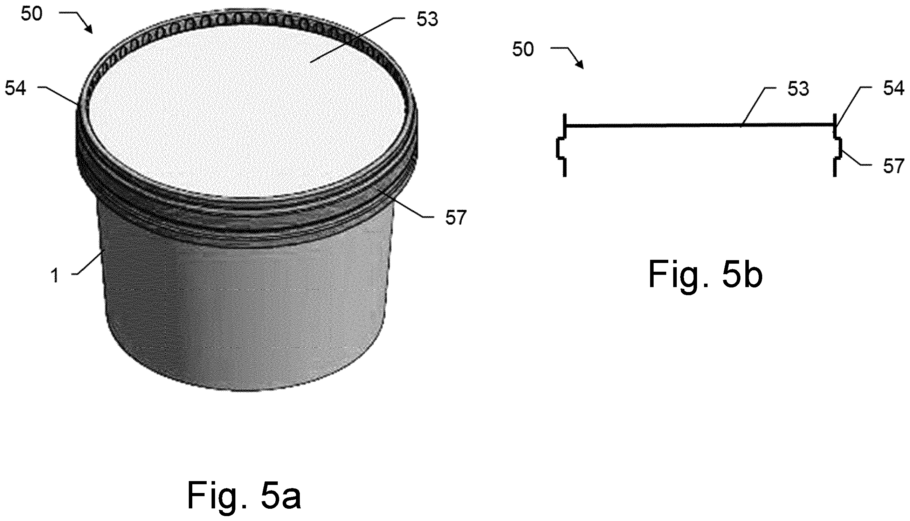

Die Figuren 5a-d, 6a-c und 7 illustrieren verschiedene Möglichkeiten, einen erfindungsgemäßen Becher 1 mit prinzipiell bekannten Deckellösungen zu kombinieren.

Der hier gezeigte Becher 1 weist - wie schon in den Figuren 1a-b und 3a-c gezeigt - als Trinkfläche eine Oberkante 3 auf, die an der Unterseite mit einen Anschlag 5 ausgestaltet ist, der um die gesamte Becheraußenseite 2 verläuft. Dieser Anschlag 5 dient - ähnlich wie bei herkömmlichen Pappbechern die Mundrolle - zur Befestigung des Deckels 50, 51, sorgt für dessen korrekte Positionierung und für einen sicheren Halt des Deckels 50, 51 auf dem Becher 1. Der Deckel ermöglicht einen sicheren Transport des gefüllten Bechers und verhindert mögliche Verunreinigungen des Inhalts. Auch kann der Inhalt bei aufgesetztem Deckel länger die gewünschte Trinktemperatur aufweisen. So wird einerseits ein Abkühlen heißer Getränke und andererseits ein Erwärmen kalter Getränke verzögert. Der Deckel kann optional eine Trinköffnung oder eine zentrale Öffnung für einen Trinkhalm aufweisen, sodass aus dem Becher auch im geschlossenen Zustand getrunken werden kann.

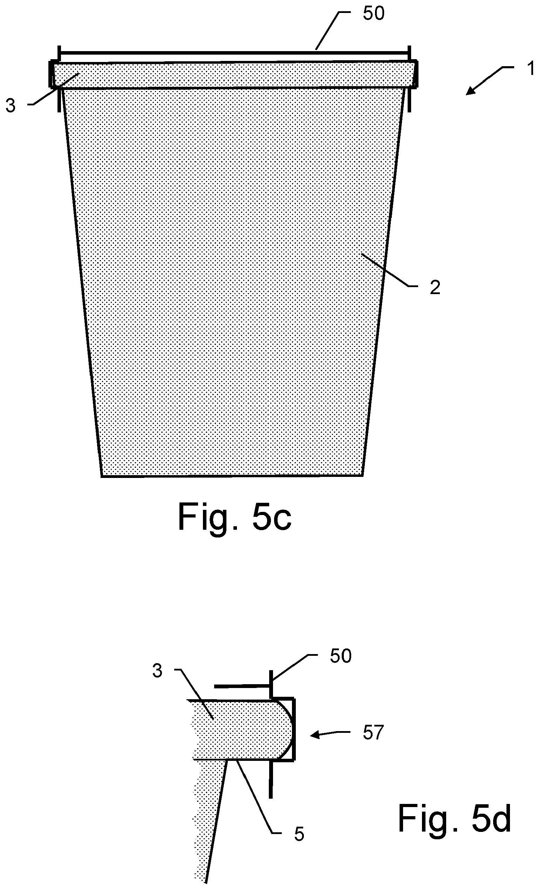

In den Figuren 5a-d wird eine erste Ausführungsform eines Deckels 50 gezeigt. Figur 5a zeigt den Deckel 50 auf den Becher 1 aufgesetzt, und Figur 5b zeigt einen Querschnitt durch den Deckel 50. Die Figuren 5c zeigt einen Schnitt durch den Deckel 50 im auf den Becher 1 aufgesetzten Zustand, und Figur 5d zeigt den Anschlag 5 in einer Detailansicht.

Der hier gezeigte Deckel 50 weist eine Scheibe 53 zum Verschließen der Trinköffnung des Bechers auf, die von einem Ring 54 umfasst wird, dessen Durchmesser dem der Oberkante 3 des Bechers entspricht. Der Ring weist auf seiner Innenseite eine Ausnehmung 57 auf, die derart dimensioniert und positioniert ist, dass bei einem Aufsetzen des Deckels auf den Becher 1, die Ausnehmung 57 sich so um die Oberkante 3 des Bechers fügt, dass der Deckel in dieser Verschlussposition festgehalten wird.

Zumindest der Ring 54 des Deckels 50 sollte vorzugsweise aus einem relativ flexiblen Material gefertigt sein, sodass er wenigstens flexibler ist als die - vorzugsweise fest oder starr ausgeführte - Becheroberkante 3. Dies ermöglicht ein beschädigungsfreies Aufsetzen und Abnehmen des Deckels. Wenn der Deckel 50 zum Aufsetzen auf den Becher 1 mit einem gewissen Druck von oben auf den Becher 1 gedrückt wird, wird der Widerstand des flexiblen Materials des Ringes 54 überwunden, sodass die Verschlussposition eingenommen wird, in welcher die Ausnehmung 57 sich um die Oberkante fügt. Ebenso kann mit einem gewissen Druck in umgekehrter Richtung der Deckel 50 wieder vom Becher 1 gelöst werden, ohne letzteren dabei zu beschädigen. Der Ring 54 oder der gesamte Deckel 50 können dazu beispielsweise vollständig aus Karton gefertigt sein.

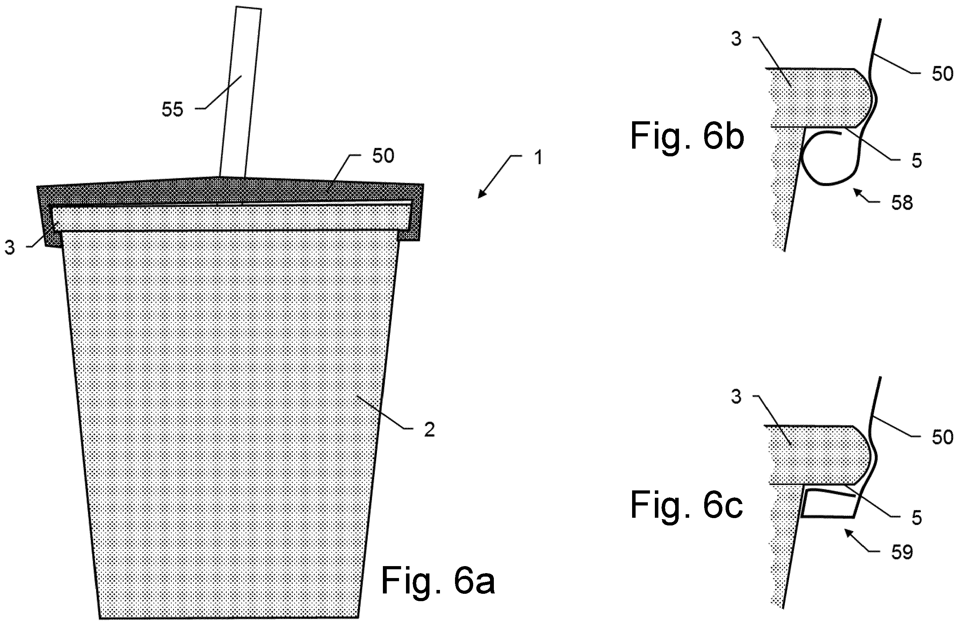

Die Figuren 6a-c zeigen eine weitere beispielhafte Ausführungsform eines Deckels zur Verwendung mit einem erfindungsgemäßen Becher. Wie in den Figuren 6a-c gezeigt, kann der Deckel auch als ein Faltdeckel 51 aus Papier bzw. Karton ausgestaltet sein, der von unten über den Becher geführt wird, bis er an dem Anschlag 5 anliegt, und anschließend über der Trinköffnung des Bechers zusammengefaltet wird. Der Anschlag 5 kann wie hier dargestellt als eine horizontal (bzw. parallel zum Becherboden) verlaufende gerade Kante ausgestaltet sein, um mit einem solchen Faltdeckel eine besonders stabile Verbindung zu erzeugen. Alternativ kann der Anschlag auch (ähnlich einer Mundrolle) rund gestaltet sein, was ein einfacheres Bestücken mit von oben aufzusetzenden Deckeln ermöglicht.

Die Figuren 6b und 6c zeigen den Anschlag 5 in einer Detailansicht. Der Deckel 51 kann als entsprechendes Gegenstück einen gerollten Anschlag 58 oder einen gefalteten Anschlag 59 aufweisen.

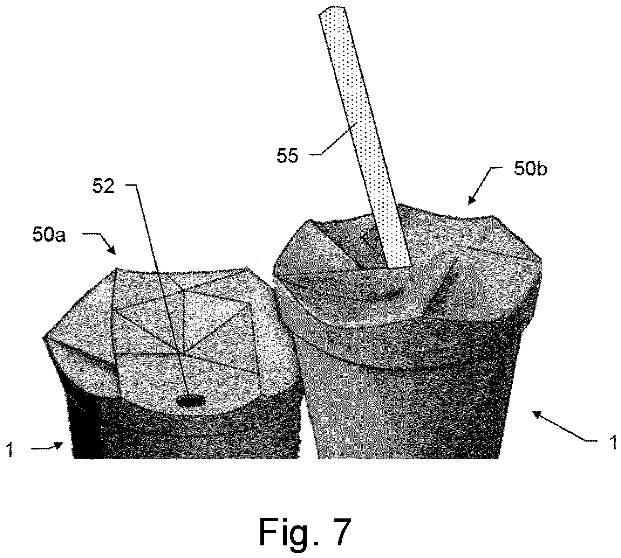

In Figur 7 sind zwei beispielhafte Ausführungsformen eines zur Verbindung mit einem erfindungsgemäßen Bechers 1 geeigneten Faltdeckel 51a, 51b dargestellt, wobei ein erster Deckel 51a eine Trinköffnung 52 aufweist, und zweiter Deckel 51b eine zentrale Öffnung für einen Trinkhalm 55.

Es versteht sich, dass die dargestellten Figuren nur mögliche Ausführungsbeispiele schematisch darstellen. Die verschiedenen Ansätze können ebenso miteinander sowie mit Vorrichtungen, beispielsweise Getränkebehältern, des Stands der Technik kombiniert werden.

## Patentansprüche

1. Essbarer Becher (1) bestehend aus einem Teigerzeugnis auf Basis von Getreidemahlerzeugnissen, aufweisend eine Außenfläche (2), eine Oberkante (3) und eine innere Mantelfläche (8), die
- ein Innenvolumen (4) zur Aufnahme von Flüssigkeiten (30) definiert, wobei das Innenvolumen (4) mindestens 100 Milliliter umfasst, und
- unbeschichtet ist, sodass im Innenvolumen (4) befindliche Flüssigkeiten (30) direkt das Teigerzeugnis kontaktieren,
**dadurch gekennzeichnet, dass**
das Teigerzeugnis eine Netto-Teigausbeute von unter 152 aufweist und die Getreidemahlerzeugnisse mindestens Mehl und thermisch stabilisierte Kleie aufweisen, wobei das Mischungsverhältnis zwischen thermisch stabilisierter Kleie und Mehl im Teigerzeugnis mindestens 1:5 beträgt.

2. Becher (1) nach Anspruch 1,
**dadurch gekennzeichnet, dass**
die Oberkante (3) über die Außenfläche (2) hinaus hervorsteht, wodurch ein Anschlag (5) definiert wird, der eine Befestigung eines Deckels (50, 51) am Becher (1) ermöglicht.

3. Becher (1) nach Anspruch 1 oder Anspruch 2,
**dadurch gekennzeichnet, dass**
das Teigerzeugnis aus mindestens den folgenden Grundzutaten hergestellt ist:
- Weizenmehl und/oder Roggenmehl,
- Wasser,
- thermisch stabilisierter Weizen-, Roggen- und/oder Haferkleie,
- Öl oder Fett, insbesondere Kokosfett,
- Zucker und
- Speisesalz,
wobei das Teigerzeugnis frei ist von
- Gelatine,
- modifizierter Stärke,
- Alginsäure,
- Alginaten,
- Agar-Agar,
- Carragen,
- Furcellaran,
- Johannisbrotkernmehl,
- Guarkernmehl,
- Traganth,
- Gummi arabicum,
- Xanthan,
- Karaya,
- Tarakernmehl,
- Gellan,
- Pektin,
- Cellulose und
- Celluloseether.

4. Becher (1) nach einem der vorangehenden Ansprüche,
**dadurch gekennzeichnet, dass**
- das Teigerzeugnis eine Netto-Teigausbeute von unter 150 aufweist, insbesondere eine Netto-Teigausbeute zwischen 146 und 150; und/oder
- das Mischungsverhältnis zwischen thermisch stabilisierter Kleie und Mehl im Teigerzeugnis mindestens 1:4 beträgt.

5. Becher (1) nach einem der vorangehenden Ansprüche,
**gekennzeichnet durch**
eine Vielzahl an Graten (7), die auf der inneren Mantelfläche (8) verlaufen, wobei
- eine Höhe der Grate (7) jeweils mindestens 0,25 Millimeter beträgt,
- eine Breite der Grate (7) jeweils mindestens 1 Millimeter beträgt,
- die Vielzahl an Graten mindestens 20 Grate (7), insbesondere mindestens 28 Grate (7) umfasst, und/oder
- mindestens eine Teilmenge der Vielzahl an Graten (7), insbesondere mindestens 10 Grate, auf dem Becherboden (9) bis zu einem Becherbodenmittelpunkt verlaufen.

6. Becher (1) nach einem der vorangehenden Ansprüche,
**dadurch gekennzeichnet, dass**
das Innenvolumen (4) mindestens 200 Milliliter umfasst und im wesentlichen kegelstumpfförmig ist, wobei der Becher zwischen dem Becherboden (9) und der inneren Mantelfläche (8) einen Winkel zwischen 96° und 105°, insbesondere zwischen 99° und 100°, aufweist.

7. Becher (1) nach einem der vorangehenden Ansprüche,
**dadurch gekennzeichnet, dass**
das Teigerzeugnis mindestens derart feuchtigkeitsresistent ist, dass Wasser mit einer Temperatur von 85°C und mit einem Volumen von mindestens 100 Millilitern, wenn es sich über einen Zeitraum von mindestens 45 Minuten, insbesondere mindestens 60 Minuten, im Innenvolumen (4) befindet, nicht aus dem Becher (1) austritt.

8. Verfahren (10) zur Herstellung eines essbaren Behältnisses, insbesondere eines essbaren Bechers (1) nach einem der vorangehenden Ansprüche, mit den Schritten:
- Bereitstellen eines Teigstückes durch Vermischen von Grundzutaten in einem definierten Verhältnis und Kneten (12) des Teigstückes,
- Bereitstellen eines formbaren Teiglings (41) aus einer definierten Menge Teig des Teigstückes, und
- Formen und Backen (15) des Teiglings (41), wobei eine Verfestigung des Teigs erfolgt und ein Rohling als ein aus dem verfestigten Teig bestehendes Behältnis bereitgestellt ist,
wobei das Formen und Backen (15) des Teiglings (41) in einer temperierten Fertigungsvorrichtung (40) erfolgt, die eine Aufnahme (42) und einen Stempel (44) aufweist, wobei
- eine Innenfläche der Aufnahme (42) im Wesentlichen der Form einer Außenseite (2) des herzustellenden Behältnisses entspricht,
- eine Stempeloberfläche im Wesentlichen der Form einer Innenseite (8) des herzustellenden Behältnisses entspricht, und
- der Stempel (44) derart ausgeformt ist, dass bei Vorliegen des Stempels (44) in einer definierten Endposition zwischen der Innenfläche der Aufnahme (42) und der Stempeloberfläche ein definierter Abstand besteht und damit ein Zwischenvolumen definiert ist,
wobei der Schritt des Formens und Backens (15) aufweist:
- ein Einbringen (14) des Teiglings (41) in die Aufnahme (42),
- ein Einführen des Stempels (44) in die Aufnahme (42) bis zu der definierten Endposition, sodass der Teig des Teiglings (41) in das Zwischenvolumen gedrückt wird und die Form eines Rohlings des herzustellenden Behältnisses einnimmt,
- ein Herausführen des Stempels (44) aus der Aufnahme, und
- eine Entnahme oder einen Auswurf (16) des Rohlings,
**gekennzeichnet durch**
- ein Temperieren der Aufnahme (42) und/oder des Stempels (44) auf eine Temperatur zwischen 120°C und 145°C, und
- ein Belassen des Stempels (44) in der Endposition für einen Zeitraum zwischen 120 und 180 Sekunden,
wobei das Einführen des Stempels (44) in die Aufnahme (42) bis zu der definierten Endposition mit einem Druck von über 5 bar erfolgt.

9. Verfahren (10) nach Anspruch 8,
**dadurch gekennzeichnet, dass**
der Teig des Teiglings (41) mit einem Druck von mindestens 6 bar in das Zwischenvolumen gedrückt wird, insbesondere mit einem Druck von mindestens 7 bar, insbesondere wobei
- die Aufnahme (42) und/oder der Stempel (44) auf eine Temperatur von etwa 140°C temperiert sind; und
- der Stempel (44) für einen Zeitraum von etwa 150 Sekunden in der Endposition verbleibt.

10. Verfahren (10) nach Anspruch 8 oder Anspruch 9,
**dadurch gekennzeichnet, dass**
- die definierte Menge Teig des Teigstückes derart gewählt ist, dass das Teigvolumen des Teiglings (41) größer als das Zwischenvolumen ist,
- der Rohling gegenüber dem herzustellenden Behältnis eine Überformung (6) aufweist, die aus einer Volumendifferenz zwischen Teigvolumen und Zwischenvolumen resultiert, und
- die Überformung (6) zumindest teilweise entfernt wird,
insbesondere wobei
- die Überformung (6) derart entfernt wird, dass eine gleichmäßige Oberkante (3) des Behältnisses entsteht,
- die Überformung (6) mittels Fräsen (17) oder Schneiden entfernt wird, und/oder
- eine durch die Entfernung der Überformung (6) entstehende Oberkante (3) des Behältnisses besäumt wird.

11. Verfahren (10) nach einem der Ansprüche 8 bis 10,
**dadurch gekennzeichnet, dass**
das Bereitstellen des Teigstückes ein Herstellen (11) eines Quellstückes beinhaltet, wobei
- das Quellstück hauptsächlich aus thermisch stabilisierter Kleie, insbesondere Weizenkleie, Roggenkleie und/oder Haferkleie, und Wasser besteht, und
- das Vermischen ein Vermischen des Quellstückes mit Getreidemehl, insbesondere Weizenmehl und/oder Roggenmehl, beinhaltet,
insbesondere wobei
- ein Mischungsverhältnis zwischen thermisch stabilisierter Kleie und Mehl mindestens 1:5, insbesondere mindestens 1:4, beträgt,
- das Quellstück vor dem Vermischen mindestens 24 Stunden ruht,
- das Herstellen (11) des Quellstückes eine Zugabe von natürlichen Farbstoffen und/oder Aromastoffen beinhaltet, und/oder
- der Teig insgesamt für höchstens drei Minuten geknetet (12) wird,

12. Verfahren (10) nach einem der Ansprüche 8 bis 11,
**dadurch gekennzeichnet, dass**
der Teig eine Netto-Teigausbeute von unter 152 aufweist, insbesondere eine Netto-Teigausbeute zwischen 146 und 150, wobei die Grundzutaten zumindest aufweisen:
- Getreidemehl, insbesondere Weizenmehl und/oder Roggenmehl,
- Wasser,
- thermisch stabilisierte Kleie, insbesondere Weizenkleie, Roggenkleie und/oder Haferkleie,
- Fett, insbesondere Kokosfett,
- Zucker und
- Speisesalz,
insbesondere wobei das Fett verflüssigt, und Zucker und Salz in Wasser gelöst als Grundzutaten verwendet werden.

13. Verfahren (10) nach einem der Ansprüche 8 bis 12,
**dadurch gekennzeichnet, dass**
das Bereitstellen des Teigstückes ohne Zugabe von Gelier- oder Verdickungsmitteln erfolgt, insbesondere wobei der Teig frei ist von:
- Gelatine,
- modifizierter Stärke,
- Alginsäure,
- Alginaten,
- Agar-Agar,
- Carragen,
- Furcellaran,
- Johannisbrotkernmehl,
- Guarkernmehl,
- Traganth,
- Gummi arabicum,
- Xanthan,
- Karaya,
- Tarakernmehl,
- Gellan,
- Pektin,
- Cellulose und
- Celluloseether.

14. Verfahren (10) nach einem der Ansprüche 8 bis 13,
**dadurch gekennzeichnet, dass**
- der Stempel (44) auf seiner Oberfläche Rillen (47) aufweist, die dazu ausgestaltet sind, Grate (7) in der Innenseite (8) des zu fertigenden Behältnisses zu erzeugen; und/oder
- der Stempel (44) derart konisch ausgestaltet ist, dass der Boden (9) und die Innenseite (8) des zu fertigenden Behältnisses einen Winkel zwischen 96° und 105° bilden, insbesondere zwischen 99° und 100°.

15. Essbares Behältnis, insbesondere essbarer Becher (1), erhältlich durch ein Verfahren (10) nach einem der Ansprüche 8 bis 14.
